# EUROPEAN PATENT APPLICATION

(11) **EP 2 725 681 A2**
(43) Date of publication of application: **30.04.2014**
(21) Application number: 13182799.0
(22) Date of filing: 03.09.2013
(51) Int. Cl.: H02J 7/00, A24F 47/00

(54) **Intelligent charge-discharge controller for battery and electronic device having same**

(30) Priority: 06.09.2012 CN 201210327275
(71) Applicant: Shenzhen First Union Technology Co., Ltd., Shenzhen, Guangdong 518103 (CN)
(72) Inventor: Li, Yonghai, 518103 Shenzhen (CN); Xu, Zhongli, 518103 Shenzhen (CN)
(74) Representative: Söltenfuss, Dirk Christian

(57) **Abstract**

An intelligent charge-discharge controller for a battery includes a charging voltage test circuit configured for testing an input voltage of the battery when in charge; a charging current control circuit configured for controlling an input current of the battery based on the tested input voltage; a battery voltage test circuit configured for testing a current voltage of the battery; and a discharging current control circuit configured for controlling a discharging current of the battery. The charging voltage test circuit and the battery voltage test circuit each are electrically connected to the charging current control circuit, and the charging voltage test circuit and the discharging current control circuit have a common circuit section. An electronic device having the intelligent charge-discharge controller is also provided.

## Description

### BACKGROUD

### 1. Technical Field

The present invention relates to a charge-discharge controller, and particularly to an intelligent charge-discharge controller for a battery, and an electronic device having the intelligent charge-discharge controller.

### 2. Description of Related Art

For a rechargeable battery in electronic devices, an acceptable charger has to be selected to charge the battery. For example, in electronic cigarettes, a type of the electronic cigarette which does not have a power controller integrated therein can only use a 4.2V charger called a mechanical charger, and another type of the electronic cigarette which has a power controller integrated therein can directly use a 5.0V charger called an integrated charger, otherwise an over-charge would damage the battery and even cause explosion, or an unsaturated charge may occur.

However, as the electronic cigarettes have the same interfaces for connecting the chargers, such that when the wrong charger is used, the user may be still unaware of that. Other electronic devices, such as mobile phones, MP3 and so on may have the same problem in charge.

What is needed, therefore, is an intelligent charge-discharge controller for a battery and an electronic device which can overcome the above shortcomings.

### BRIEF DESCRIPTION OF THE DRAWINGS

Many aspects of the present intelligent charge-discharge controller for a battery and electronic device can be better understood with reference to the following drawings. The components in the drawings are not necessarily drawn to scale, the emphasis instead being placed upon clearly illustrating the principles of the present intelligent charge-discharge controller for a battery and electronic device. Moreover, in the drawings, like reference numerals designate corresponding parts throughout the several views.
FIG. 1 is a circuit diagram of an intelligent charge-discharge controller for a battery in accordance with an embodiment.
FIG. 2 is a schematic view of an electronic device having the intelligent charge-discharge controller for a battery in accordance with an embodiment.

### DETAILED DESCRIPTION

Embodiments of the present intelligent charge-discharge controller for a battery and electronic device will now be described in detail below and with references to the drawings.

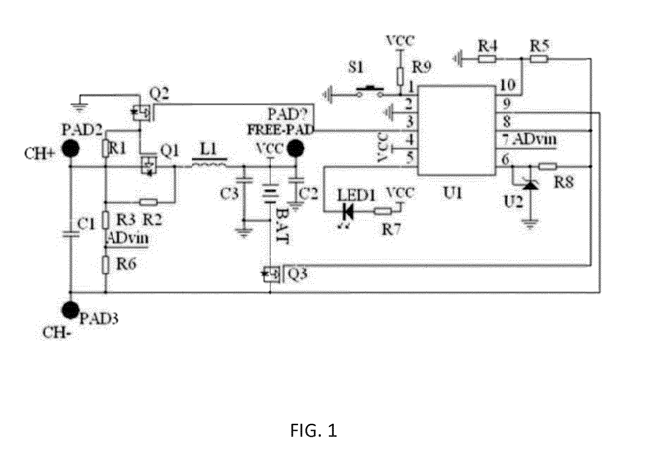

Referring to FIG. 1, an intelligent charge-discharge controller for a battery is provided. The charge-discharge controller mainly includes a charging voltage test circuit, a charging current control circuit, a battery voltage test circuit, and a discharging current control circuit.

The charging voltage test circuit includes a capacitor C1, a resistor R2, a resistor R3, a resistor R6, an inductor L1, a MOS tube Q3, a battery BAT, a single chip microcomputer U1 and an integrated circuit U2. The resistor R2, the inductor L1, the battery BAT and the MOS tube Q3 are in a first series connection in that order. The resistor R3 and the resistor R6 are in a second series connection in that order. The capacitor C1, the first series connection and the second series connection are in parallel connection. The single chip microcomputer U1 and the MOS tube Q3 are in parallel connection, and the single chip microcomputer U1 and the integrated circuit U2 are also in parallel connection. The charging voltage test circuit is configured for testing an input voltage of the battery when in charge.

The charging current control circuit includes a resistor R1, a PMOS tube Q1, a MOS tube Q2, the inductor L1, a capacitor C3, the battery BAT, the MOS tube Q3 and the single chip microcomputer U1. The PMOS tube Q1, MOS tube Q2 and the MOS tube Q3 each are a transistor. The inductor L1, the battery BAT and the MOS tube Q3 are in a series connection. The capacitor C3 and the battery BAT are in parallel connection. The resistor R1 and the PMOS tube Q1 are in parallel connection, and the PMOS tube Q1 and the MOS tube Q2 are also in parallel connection. The MOS tube Q2, the MOS tube Q3 and the single chip microcomputer U1 are in parallel connection. The control circuit is configured for controlling an input current of the battery according to the tested input voltage in charge.

The battery voltage test circuit includes a resistor R8, the integrated circuit U2, a resistor R4, a resistor R5 and the single chip microcomputer U1. The resistor R4, resistor R5, resistor R8 and the integrated circuit U2 are in series connection in that order. A pin 10 of the single chip microcomputer U1 is located between the resistor R4 and the resistor R5, and forms a parallel connection with the resistor R4 and the resistor R5. A pin 8 of the single chip microcomputer U1 is located between the resistor R5 and the resistor R8, and forms a parallel connection with the resistor R5 and the resistor R8. A pin 6 of the single chip microcomputer U1 is located between the resistor R8 and the integrated circuit U2, and forms a parallel connection with the resistor R8 and the integrated circuit U2. The battery voltage test circuit is configured for testing a current voltage of the battery.

The discharging current control circuit includes the capacitor C1, a capacitor C2, the capacitor C3, the resistor R1, the resistor R3, the resistor R6, the PMOS tube Q1, the MOS tube Q2, the MOS tube Q3, the inductor L1, the battery BAT and the single chip microcomputer U1. The inductor L1, the battery BAT and the MOS tube Q3 are in series connection in that order. The capacitor C3 and the battery BAT are in parallel connection. The resistor R1 and the PMOS tube Q1 are in parallel connection, and the resistor R1, the PMOS tube Q1 and the MOS tube Q2 are in series connection. The MOS tube Q2, MOS tube Q3 and the single chip microcomputer U1 are in parallel connection. The control circuit is configured for controlling a discharging current of the battery.

The charging voltage test circuit and the battery voltage test circuit each are electrically connected to the charging current control circuit, and the charging voltage test circuit shares a same circuit section with the discharging current control circuit.

When an electronic cigarette is electrically connected to a charger, the single chip microcomputer U1 controls the MOS tube Q3 at a conducting state, and the MOS tube Q1 at a non-conducting state. At this time, the resistor R2 is conductible at the charging circuit. A voltage sum of the resistor R3 and the resistor R6 is the output voltage of the charger, and the output voltage is consistent, and not changed with the charging voltage of the electronic cigarette. By testing the voltage sum of the resistor R3 and the resistor R6, a type of the charger can be identified. For example, when the voltage sum is 4.2V, the charger can be identified to be a mechanical charger; and when the voltage sum is 5.0V, the charger can be identified to be an integrated charger. The microcomputer U1 controls the electronic cigarette in different charging modes according to the different types of the chargers, for example, if it is the mechanical charger, the microcomputer U1 controls the pin 3 and the pin 8 output a PWM wave with a high duty cycle of low frequency, and controls the MOS tube Q1 and the MOS tube Q3 power on and off; and if it is the integrated charger, the microcomputer U1 controls the pin 3 and the pin 8 output a PWM wave with a low duty cycle of high frequency, and controls the MOS tube Q1 and the MOS tube Q3 power on and off, then balancing the charging current via an energy storage function of the inductor L1. When the charging mode starts, the microcomputer U1 tests a voltage between the resistor R4 and the resistor R5 via pin 10, thereby detecting a battery voltage of the electronic cigarette. When the battery voltage is saturated, the microcomputer U1 controls the MOS tube Q1 and the MOS tube Q3 power off.

Before charging, the microcomputer U1 controls the pin 3 and pin 8 each at a low level voltage state, the pin 9 at a high level voltage state via a pull-up action of the resistors R3 and R4, and the MOS tube Q2 power off. A gate of the PMOS tube Q1 is at a high level voltage state, the PMOS tube Q1 remains power off, and the MOS tube Q3 remains power off. In charge, the CH+ end is connected to a positive end of the charger, and the CH- end is connected to a negative end of the charger, then the charger, the resistor R2, the inductor L1, the battery BAT and the MOS tube Q3 forms a charging circuit. In this charging circuit, a resistance of the resistor R2 is preferably not too great. Due to the charging circuit, the pin 9 is changed into a low level voltage state.

When the microcomputer U1 detects the voltage change of the pin 9, it controls the pin 8 at a high level voltage state, and powers on the MOS tube Q3. After the MOS tube Q3 is powered on, the microcomputer U1 samples the voltage between the resistor R3 and the resistor R6. In order to avoid a too great current in the charging circuit, a resistance of the resistor R3 and a resistance of the resistor R6 cannot too small. According to the voltage samples between the resistor R3 and the resistor R6, the voltage sum of the resistor R3 and the resistor R6 can be obtained, then a type (4.2V of a mechanical charger or 5.0V of an integrated charger) of the charger can be identified.

When the charger is the mechanical charger, the pin 3 and pin 8 which respectively controls the PMOS tube Q1 and MOS tube Q3 power on and off, will output a PWM wave with a high duty cycle, such that an output power of the charger can be completely received by the charging circuit, and if the charger is removed, the microcomputer U1 can detect quickly. When the charger is the integrated charger, the microcomputer U1 controls the pin 3 and pin 8 output different PWM waves according to different charging voltages of the electronic cigarette, thereby simulating a charging mode of a Li-ion battery, i.e., a trickle current to a constant current and then to a constant voltage mode during the charging. The inductor L1 has an energy saving and releasing ability, such that it can adjust a charging current in the charging mode and an output current in an output mode.

The battery voltage test is carried out via sampling voltage between the resistor R4 and the resistor R5. In order to obtain more accurate voltage samples, the pin 8 of the microcomputer U1 is at a high voltage state during the sampling. Whatever the mechanical charger or the integrated charger, the battery voltage test circuit tests the battery voltage in time, and when the battery voltage attains a satisfactory value, the microcomputer U1 powers off the PMOS tube Q1 and the MOS tube Q3 to stop the charging. After the PMOS tube Q1 and the MOS tube Q3 are powered off, as the MOS tube Q3 has a certain forward voltage, and the resistor R2 has a certain resistance, there is still a little current flows through the battery, such that some tests about the charging circuit can be still carried out. When the charger is removed, the microcomputer U1 can detect this via the pin 9.

When it is not in charge, the discharging current control circuit can be used. That is, an atomizing device can be connected to the CH+ end and CH- end to form a discharging circuit. At this time, the microcomputer U1 controls the MOS tube Q1 and the MOS tube Q3 power on, then the battery BAT, inductor L1, PMOS tube Q1 MOS tube Q3 and the atomizing device forms a working circuit.

Due to the intelligent charge-discharge controller, a 4.2V charger or a 5V charger can be identified by the controller, then the controller uses different charging modes according to the different chargers. In this way, either a 4.2V charger or a 5V charger can be selected for the electronic device integrated with the controller for the battery, thereby an over charge or an unsaturated charge can be avoided.

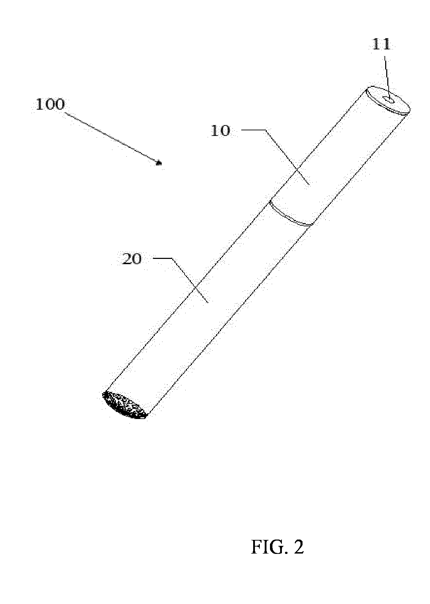

Referring to FIG.2, an electronic device having the intelligent charge-discharge controller is shown. In the illustrated embodiment, the electronic device is an electronic cigarette 100. The electronic cigarette 100 includes a battery assembly 20 and an atomizing device 10 having a nozzle 11. The battery assembly 20 integrates the intelligent charge-discharge controller including the battery BAT therein. When it needs charge, the atomizing device 10 can be detached from the battery assembly 20, then the charger can be connected to the battery assembly 20. After charge, the atomizing device 10 can be connected to the battery assembly 20, then the user can suck the nozzle 11 to use the electronic cigarette 100.

It is understood that the above-described embodiments are intended to illustrate rather than limit the disclosure. Variations may be made to the embodiments and methods without departing from the spirit of the disclosure. Accordingly, it is appropriate that the appended claims be construed broadly and in a manner consistent with the scope of the disclosure.

## Claims

1. An intelligent charge-discharge controller for a battery, comprising:
a charging voltage test circuit configured for testing an input voltage of the battery when in charge;
a charging current control circuit configured for controlling an input current of the battery based on the tested input voltage;
a battery voltage test circuit configured for testing a current voltage of the battery; and
a discharging current control circuit configured for controlling a discharging current of the battery,
wherein the charging voltage test circuit and the battery voltage test circuit each are electrically connected to the charging current control circuit, and the charging voltage test circuit and the discharging current control circuit have a common circuit section.

2. The intelligent charge-discharge controller of claim 1, wherein the charging voltage test circuit comprises an inductor and a MOS tube electrically connected to the inductor.

3. The intelligent charge-discharge controller of claim 2, wherein the charging voltage test circuit further comprises a capacitor, a resistor, the battery, a microcomputer and an integrated circuit, the capacitor, the resistor and the battery each are electrically connected to the microcomputer, and the microcomputer is electrically connected to the integrated circuit.

4. The intelligent charge-discharge controller of any one of preceding claims, wherein the charging current control circuit comprises an inductor and a transistor, and the inductor is electrically connected to the transistor.

5. The intelligent charge-discharge controller of claim 4, wherein the charging current control circuit further comprises a resistor, a capacitor, the battery and a microcomputer, the resistor, the capacitor and the battery each are electrically connected to the microcomputer.

6. The intelligent charge-discharge controller of any one of preceding claims, wherein the battery voltage test circuit comprises a resistor and an integrated circuit, and the resistor is electrically connected to the integrated circuit.

7. The intelligent charge-discharge controller of claim 6, wherein the battery voltage test circuit further comprises a microcomputer, the microcomputer is electrically connected to the integrated circuit.

8. The intelligent charge-discharge controller of any one of preceding claims, wherein the discharging current control circuit comprises a capacitor, a resistor, a transistor, an inductor, the battery and a microcomputer, the capacitor, resistor, the transistor, the inductor and the battery each are electrically connected the microcomputer.

9. An electronic device comprising a battery and an intelligent charge-discharge controller of any one of claims 1 to 8 electrically connected to the battery.

10. The electronic device of claim 9, wherein the electronic device is an electronic cigarette, and the electronic cigarette comprises a battery assembly and an atomizing device connected to the battery assembly, the battery and the intelligent charge-discharge controller are received in the battery assembly.
